(19) Europäisches Patentamt
European Patent Office
Office européen des brevets

(11) **EP 4 622 203 A1**

(12) **EUROPEAN PATENT APPLICATION**
published in accordance with Art. 153(4) EPC

(43) Date of publication:
**24.09.2025 Bulletin 2025/39**

(21) Application number: **22969839.4**

(22) Date of filing: **30.12.2022**

(51) International Patent Classification (IPC):
**H04L 27/00** (2006.01)

(52) Cooperative Patent Classification (CPC):
**H04L 27/00**

(86) International application number:
**PCT/CN2022/144196**

(87) International publication number:
**WO 2024/138697 (04.07.2024 Gazette 2024/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Huawei Technologies Co., Ltd.
Shenzhen, Guangdong 518129 (CN)**

(72) Inventors:
• **WANG, Haoyi
Shenzhen, Guangdong 518129 (CN)**
• **MA, Yue
Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **EVM MEASUREMENT METHOD, COMMUNICATION APPARATUS AND NETWORK DEVICE**

(57) This application provides an EVM detection method, a communication apparatus, and a network device, and is applied to the field of wireless communication. The method includes: A first unit receives first information from a network management, and sends second information to a second unit in an EVM detection periodicity based on the first information, where the second information includes EVM detection data and time domain information of the EVM detection data, and the time domain information indicates a position of the EVM detection data in a radio frame; and the first unit receives an EVM detection result from the second unit, where the EVM detection result includes an EVM value of at least one node in the second unit and a quantity of sampling nodes for the EVM detection data, and an EVM value of any node in the at least one node is determined based on EVM detection data collected on the node. According to the foregoing method, an EVM value of a radio frequency system can be obtained at low costs.

FIG. 5

## Description

## TECHNICAL FIELD

This application relates to the field of wireless communication, and in particular, to an error vector magnitude (error vector magnitude, EVM) detection method, a communication apparatus, and a network device.

## BACKGROUND

An error vector magnitude (EVM) is an important indicator for evaluating a radio frequency system. Currently, EVM measurement needs to use an external spectrometer, and technical personnel need to build test networking and manually configure an instrument, resulting in high labor costs. With continuous development and growth of customer demand supply, there are increasingly more types of radio frequency devices. Due to high labor costs and test requirements, depending only on an instrument means to collect statistics on an EVM value of the radio frequency system has a significant limitation.

Therefore, how statistics on the EVM value of the radio frequency system can be more quickly and flexibly collected becomes a problem that urgently needs to be resolved.

## SUMMARY

This application provides an EVM detection method, a communication apparatus, and a network device, so that an EVM value of a radio frequency system can be obtained at low costs.

According to a first aspect, an EVM detection method is provided, where the method is applied to a first unit, and the first unit can implement a part or all of baseband functions. The method includes: receiving first information from a network management, where the first information indicates the first unit to enable an EVM detection function; sending second information to a second unit in an EVM detection periodicity based on the first information, where the second information includes EVM detection data and time domain information of the EVM detection data, the time domain information indicates a position of the EVM detection data in a radio frame, and the second unit can implement a radio frequency function; and receiving an EVM detection result from the second unit, where the EVM detection result includes an EVM value of at least one node in the second unit and a quantity of sampling nodes for the EVM detection data, an EVM value of any node in the at least one node is determined based on EVM detection data collected on the node, and the at least one node includes one or more of the following: an input of the second unit, an input of clipping processing, an output of the clipping processing, an input of digital pre-distortion (digital pre-distortion, DPD) processing, an output of the DPD processing, or an output of an analog link.

According to the EVM detection method provided in this application, the first unit may periodically send the EVM detection data to the second unit based on an indication of the network management; and the second unit may determine, based on EVM detection data collected on a corresponding node, an EVM value of the node, and may report a detection result to the first unit. The method does not need participation of an external spectrometer, so that an EVM value of a radio frequency system can be obtained at low costs. In addition, the method is an online detection task that has no impact on a service, and can run for a long time to monitor and ensure an operating status of the second unit.

In a possible implementation, the first unit is a baseband unit (baseband unit, BBU), and the second unit is a remote radio unit (remote radio unit, RRU).

In a possible implementation, the first unit is a distributed unit (distributed unit, DU), and the second unit is an active antenna unit (active antenna unit, AAU).

In a possible implementation, the method may further include: determining a faulty node in the at least one node based on the EVM detection result of the second unit and an EVM detection result of another second unit that belongs to a same link as the second unit.

Based on this solution, the faulty node may be determined based on EVM detection result of second units on the same link, to accurately locate a fault position, and improve maintenance and monitoring efficiency.

In a possible implementation, the method may further include: performing troubleshooting on the determined faulty node.

Based on this solution, the troubleshooting is performed on the faulty node, so that a network device including the first unit and the second unit can implement functions of monitoring, warning, and self-healing.

In a possible implementation, the second information further includes a physical address of the second unit and/or indication information of the at least one node.

In a possible implementation, determining the faulty node in the at least one node based on the EVM detection result of the second unit and the EVM detection result of the another second unit that belongs to the same link as the second unit includes: determining a normal EVM value or an abnormal EVM value in the EVM detection result of the second unit and the EVM detection result of the another second unit; and determining the faulty node in the at least one node based on the normal EVM value or the abnormal EVM value.

Based on this solution, the fault position can be accurately located based on the abnormal EVM value.

In a possible implementation, before sending the second information to the second unit in the EVM detection periodicity based on the first information, the method further includes: receiving the EVM detection periodicity from the network management.

According to a second aspect, an EVM detection method is provided, where the method is applied to a second unit, and the second unit can implement a radio frequency function. The method includes: receiving second information from a first unit, where the first unit can implement a part or all of baseband functions, the second information includes EVM detection data and time domain information of the EVM detection data, and the time domain information indicates a position of the EVM detection data in a radio frame; collecting the EVM detection data on at least one node based on the second information, where the at least one node includes one or more of the following: an input of the second unit, an input of clipping processing, an output of the clipping processing, an input of digital pre-distortion DPD processing, an output of the DPD processing, or an output of an analog link; determining an EVM value of any node in the at least one node based on EVM detection data collected on the node; and sending an EVM detection result to the first unit, where the EVM detection result includes an EVM value of the at least one node and a quantity of sampling nodes for the EVM detection data.

According to the EVM detection method provided in this application, the first unit may periodically send the EVM detection data to the second unit based on an indication of a network management; and the second unit may determine, based on EVM detection data collected on a corresponding node, an EVM value of the node, and may report a detection result to the first unit. The method does not need participation of an external spectrometer, so that an EVM value of a radio frequency system can be obtained at low costs. In addition, the method is an online detection task that has no impact on a service, and can run for a long time to monitor and ensure an operating status of the second unit.

In a possible implementation, the first unit is a BBU, and the second unit is an RRU.

In a possible implementation, the first unit is a DU, and the second unit is an AAU.

In a possible implementation, the EVM value of any node in the at least one node satisfies the following formula:

$$EVM = \sqrt{\frac{\left|I_{\mathrm{m}}\text{-}I_{\mathrm{n}}\right|^2 + \left|Q_{\mathrm{m}}\text{-}Q_{\mathrm{n}}\right|^2}{\left|I_{\mathrm{m}} + Q_{\mathrm{m}}\right|^2}}$$

where $I_{\mathrm{m}}$ indicates a component of the EVM detection data in a direction I, $Q_{\mathrm{m}}$ indicates a component of the EVM detection data in a direction Q, $I_{\mathrm{n}}$ indicates a component, in the direction I, of the EVM detection data collected on the node, and $Q_{\mathrm{n}}$ indicates a component, in the direction Q, of the EVM detection data collected on the node. Alternatively, $I_{\mathrm{m}}$ indicates a component, in a direction I, of EVM detection data collected at the input of the second unit, $Q_{\mathrm{m}}$ indicates a component, in a direction Q, of the EVM detection data collected at the input of the second unit, $I_{\mathrm{n}}$ indicates a component, in the direction I, of the EVM detection data collected on the node, and $Q_{\mathrm{n}}$

indicates a component, in the direction Q, of the EVM detection data collected on the node.

According to a third aspect, an error vector magnitude EVM detection method is provided, where the method is applied to a network management. The method includes: generating first information, and sending the first information to a first unit, where the first information indicates the first unit to enable an EVM detection function, and the first unit can implement a part or all of baseband functions.

According to the EVM detection method provided in this application, the network management may indicate the first unit to enable the EVM detection function; the first unit may periodically send EVM detection data to a second unit based on an indication of a network; and the second unit may determine, based on EVM detection data collected on a corresponding node, an EVM value of the node, and may report a detection result to the first unit. The method does not need participation of an external spectrometer, so that an EVM value of a radio frequency system can be obtained at low costs. In addition, the method is an online detection task that has no impact on a service, and can run for a long time to monitor and ensure an operating status of the second unit.

In a possible implementation, the method further includes: sending an EVM detection periodicity to the first unit.

According to a fourth aspect, a communication apparatus is provided, and includes a module or a unit configured to perform the method in the first aspect or any one of possible implementations of the first aspect.

According to a fifth aspect, a communication apparatus is provided, and includes a module or a unit configured to perform the method in the second aspect or any one of possible implementations of the second aspect.

According to a sixth aspect, a communication apparatus is provided, and includes a module or a unit configured to perform the method in the third aspect or any one of possible implementations of the third aspect.

According to a seventh aspect, a network device is provided, and includes communication apparatuses provided in the fourth aspect and the fifth aspect.

According to an eighth aspect, a communication apparatus is provided, and includes a processor, where the processor is coupled to a memory, the memory is configured to store a computer program or instructions, and the processor is configured to execute the computer program or the instructions stored in the memory, to implement the method in the first aspect or any one of possible implementations of the first aspect, or implement the method in the second aspect or any one of possible implementations of the second aspect, or implement the method in the third aspect or any one of possible implementations of the third aspect.

In a possible implementation, the apparatus further includes the memory coupled to the processor.

In a possible implementation, there are one or more processors, and/or one or more memories.

In a possible implementation, the memory and the processor may be integrated together, or the memory and the processor are arranged separately.

In a possible implementation, the apparatus further includes a communication interface, and the processor is coupled to the communication interface.

According to a ninth aspect, a processor is provided, and includes an input circuit, an output circuit, and a processing circuit. The processing circuit is configured to: receive a signal via the input circuit, and transmit the signal via the output circuit, to enable the processor to perform the method in any one of the foregoing aspects or any one of possible implementations of any one of the foregoing aspects.

In a specific implementation process, the processor may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and various circuits are not limited in this application.

According to a tenth aspect, a communication system is provided, and includes the foregoing first unit, the foregoing second unit, and/or the foregoing network management.

According to an eleventh aspect, a computer program product is provided, where the computer program product includes a computer program (which may also be referred to as code or instructions). When the computer program is run, a computer is enabled to perform the method in any one of the foregoing aspects or any one of possible implementations of any one of the foregoing aspects.

According to a twelfth aspect, a computer-readable storage medium is provided, where the computer-readable storage medium stores a computer program (which may also be referred to as code or instructions). When the computer program runs on a computer, the computer is enabled to perform the method in any one of the foregoing aspects or any one of possible implementations of any one of the foregoing aspects.

According to a thirteenth aspect, a chip is provided, and includes a processor configured to invoke a computer program from a memory and run the computer program, to enable a communication apparatus on which the chip is installed to perform the method according to any one of the foregoing aspects or any one of possible implementations of any one of the foregoing aspects.

## BRIEF DESCRIPTION OF DRAWINGS

FIG. 1 is a diagram of EVM measurement networking;
FIG. 2 is a diagram of RAN deployment according to an embodiment of this application;
FIG. 3 is a diagram of a communication system according to an embodiment of this application;
FIG. 4 is a diagram of another communication system according to an embodiment of this application;
FIG. 5 is a diagram of an EVM detection method according to an embodiment of this application;
FIG. 6 is a diagram of a structure of a radio frame according to an embodiment of this application;
FIG. 7 is a diagram of a structure of another radio frame according to an embodiment of this application;
FIG. 8 is a diagram of a structure of a second unit according to an embodiment of this application;
FIG. 9 is a diagram of a fault analysis model according to an embodiment of this application;
FIG. 10 is a diagram of fault analysis and troubleshooting according to an embodiment of this application;
FIG. 11 is a block diagram of a communication apparatus according to an embodiment of this application;
FIG. 12 is a block diagram of a communication apparatus according to an embodiment of this application;
FIG. 13 is a diagram of a structure of a network device according to an embodiment of this application; and
FIG. 14 is a diagram of a structure of a network device according to an embodiment of this application.

## DESCRIPTION OF EMBODIMENTS

The following describes technical solutions in embodiments of this application with reference to accompanying drawings in embodiments of this application.

In descriptions of this application, unless otherwise specified, "/" indicates that associated objects are in an "or" relationship. For example, A/B may indicate A or B. "And/or" in this application merely describes an association relationship between the associated objects, and indicates that three relationships may exist. For example, A and/or B may indicate the following cases: Only A exists, both A and B exist, and only B exists, where A and B may be singular or plural. In addition, in the descriptions of this application, unless otherwise specified, "a plurality of" means two or more. "At least one item (piece) of the following" or a similar expression thereof means any combination of these items, including a singular item (piece) or any combination of a plurality of items (pieces). For example, at least one item (piece) of a, b, or c may indicate: a, b, c, a-b, a-c, b-c, or a-b-c, where a, b, and c may be singular or may be plural. In addition, to clearly describe the technical solutions in embodiments of this application, words such as "first" and "second" are used in embodiments of this application to distinguish same items or similar items that have basically same functions and roles. A person skilled in the art may understand that, the words such as "first" and "second" do not limit a quantity or an execution sequence, and the words such as "first" and "second" do not limit a specific difference.

It should be understood that, in this application, descriptions similar to "in a case that...", "if...", "when...", "provided that...", and the like may be used interchangeably.

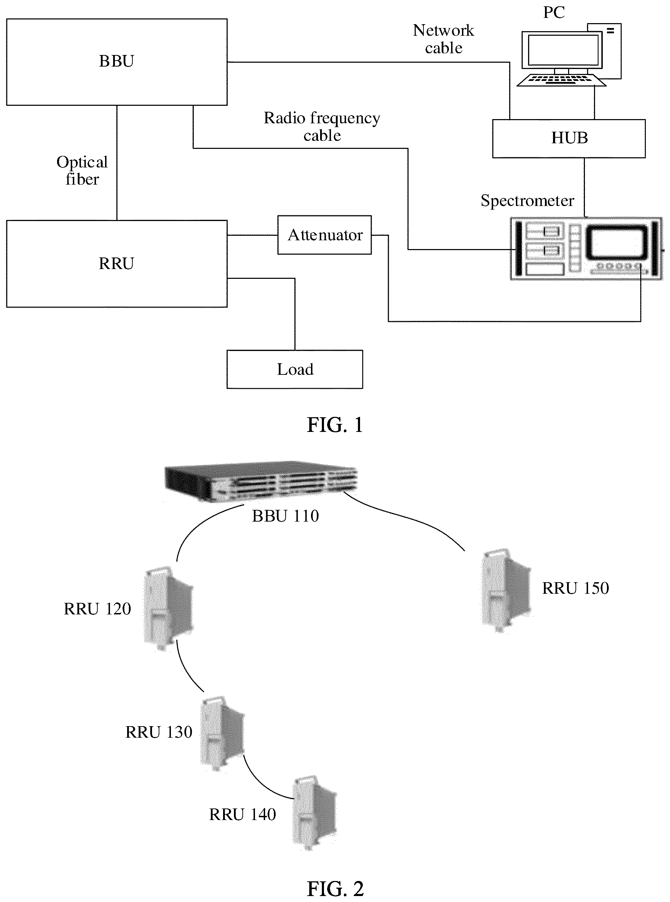

FIG. 1 is a diagram of EVM measurement networking. Refer to FIG. 1. An external spectrometer is required for EVM measurement. Generally, a test mode, including parameters such as a rate and a modulation mode, needs to be adjusted on the spectrometer. In addition, it is also necessary to correctly connect the spectrometer and an RRU, to ensure that performance of an instrument satisfies a requirement of a system to be tested. In addition, a module, such as a PC, a hub (HUB), load, an attenuator, or a BBU, required to be used for testing, needs to be correctly connected. After configuration is completed, an EVM indicator may be directly observed on the spectrometer. The method requires technical personnel to build test networking and manually configure the instrument, resulting in high labor costs. In addition, a test result of the method is an EVM value of an entire base station. Consequently, a specific fault point cannot be identified, which is not conducive to further fault analysis.

In view of this, this application provides an EVM detection method. In the method, a first unit (for example, a BBU) that can implement a part or all of baseband functions may periodically send EVM detection data to a second unit (for example, an RRU) that can implement a radio frequency function; and the second unit may calculate, based on EVM detection data collected on a corresponding node, an EVM value of the node, and may report a detection result to the first unit. The method does not need participation of an external spectrometer, so that an EVM value of a radio frequency link can be obtained at low costs.

For example, in this application, the first unit may be a baseband processing unit, and the second unit may be a radio frequency processing unit.

For example, the technical solutions in embodiments of this application may be applied to a conventional radio access network (radio access network, RAN), or may be applied to an open radio access network (open radio access network, ORAN). For example, in the conventional RAN, the first unit may be a BBU, and the second unit may be an RRU. For another example, in the ORAN, the first unit may be a DU, and the second unit may be an AAU.

One BBU supports one or more RRUs. For example, FIG. 2 is a diagram of RAN deployment. Refer to FIG. 2. A BBU 110 may be connected to an RRU 120 and an RRU 150, and an RRU 130 and an RRU 140 may be connected to the RRU 120 in a cascading manner. In this scenario, the RRU 120, the RRU 130, and the RRU 140 are RRUs on a same link. The RRU 120 may forward information between the BBU 110 and the RRU 130, to implement information exchange between the BBU 110 and the RRU 130. The RRU 120 and the RRU 130 may forward information between the BBU 110 and the RRU 140, to implement information exchange between the BBU 110 and the RRU 140. For example, in this application, an EVM detection result of the RRU 120 may be sent to the BBU 110 through a connection between the RRU 120 and the BBU 110; an EVM detection result of the RRU 130 may be first sent to the RRU 120, and then sent by the RRU 120 to the BBU 110; and an EVM detection result of the RRU 140 may be first sent to the RRU 130, then sent by the RRU 130 to the BBU 120, and finally sent by the RRU 120 to the BBU 110. In an example, information may be transmitted between the BBU and an RRU or between RRUs through a common public radio interface (common public radio interface, CPRI) or an enhanced common public radio interface (enhanced common public radio interface, eCPRI).

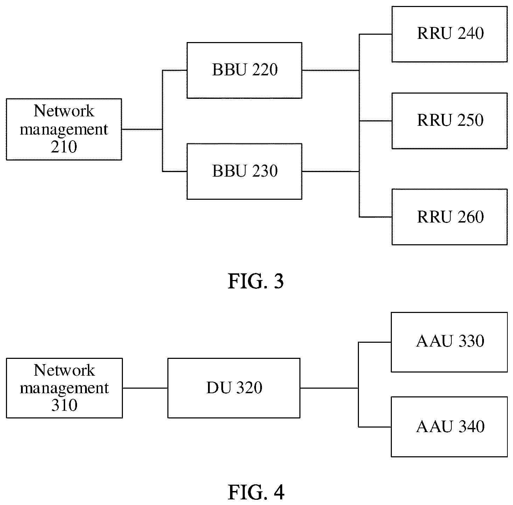

For example, FIG. 3 is a diagram of a communication system used in an embodiment of this application. Refer to FIG. 3. The communication system includes a network management 210, one or more BBUs (for example, a BBU 220 and a BBU 230 shown in FIG. 3), and one or more RRUs (for example, an RRU 240, an RRU 250, and an RRU 260 shown in FIG. 3). The BBU 220 is connected to the RRU 240 and the RRU 250, and the BBU 230 is connected to the RRU 250 and the RRU 260. Certainly, respective RRUs connected to the two BBUs may alternatively be completely different. In this application, the network management 210 may control the BBU to enable an EVM test function. After enabling the EVM test function, the BBU may send EVM detection data to an RRU supported by the BBU; and the RRU may determine an EVM value based on the EVM detection data, and report the EVM value.

One or more AAUs can be deployed under a same DU. For example, FIG. 4 is a diagram of another communication system used in an embodiment of this application. Refer to FIG. 4. The communication system includes a network management 310, a DU 320, and one or more AAUs (for example, an AAU 330 and an AAU 340 shown in FIG. 4). In an example, information may be transmitted between the DU 320 and the AAU through a CPRI or an eCPRI. In this application, the network management 310 may control the DU 320 to enable an EVM test function. After enabling the EVM test function, the DU 320 may send EVM detection data to an AAU supported by the DU 320; and the AAU may determine an EVM value based on the EVM detection data, and report the EVM value.

It should be understood that, the network management in embodiments of this application may control and manage a network. For example, the network management may be a console that manages the first unit and the second unit, or the network management may be a console that manages all devices in the network.

The following describes in detail the solutions provided in this application with reference to the accompanying drawings. It should be understood that, the solutions provided in this application may be applied to an architecture shown in any one of FIG. 2 to FIG. 4.

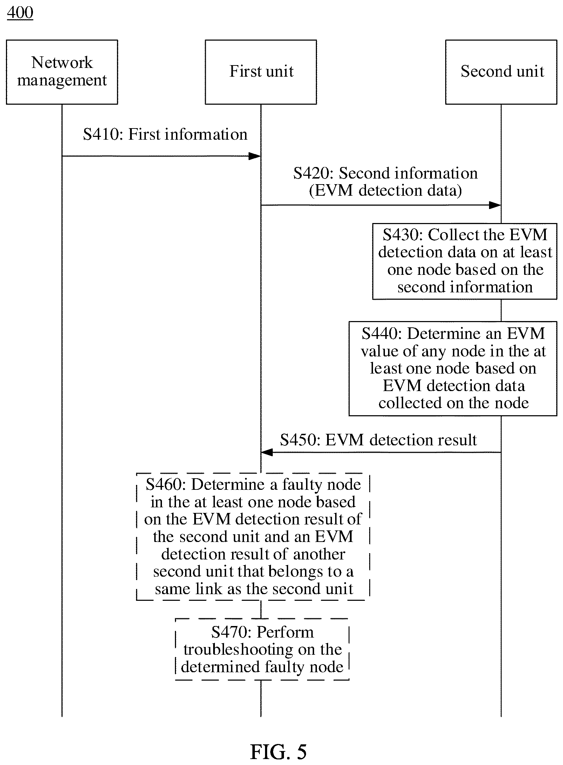

FIG. 5 is a diagram of an EVM detection method according to this application. The method 400 may include S410 to S450. The following describes each step.

S410: A network management sends first information to a first unit. Correspondingly, the first unit receives the first information from the network management.

The first information indicates the first unit to enable an EVM detection function. It should be understood that, the first unit enabling the EVM detection function may also be considered as the first unit performing S420.

Optionally, when sending the first information to the first unit, the network management may further send an EVM detection periodicity to the first unit. The EVM detection periodicity is a periodicity in which the first unit sends EVM detection data, and the EVM detection data is used by a second unit to perform EVM detection.

It should be understood that, if the network management does not send the EVM detection periodicity to the first unit, the first unit may alternatively send the EVM detection data in a default EVM detection periodicity of a system.

S420: The first unit sends second information to the second unit in the EVM detection periodicity based on the first information. Correspondingly, the second unit receives the second information from the first unit.

The second information includes the EVM detection data and time domain information of the EVM detection data, and the time domain information indicates a position of the EVM detection data in a radio frame.

Specifically, after receiving the first information, the first unit allocates a resource to the EVM detection data based on the EVM detection periodicity, sends resource information of the EVM detection data (namely, the time domain information of the EVM detection data) to the second unit, and sends the EVM detection data on the allocated resource. The second unit may obtain the EVM detection data based on the resource information of the EVM detection data. For example, if the EVM detection periodicity is 15 hours, the first unit allocates the resource to the EVM detection data every 15 hours, sends the resource information of the EVM detection data to the second unit, and sends the EVM detection data on the allocated resource. It should be understood that, resources allocated to EVM detection data in periodicities may be the same or different, and EVM detection data sent in periodicities may be the same or different.

In an example, the EVM detection data may be fixed data agreed on between the first unit and the second unit, or may be random data. The fixed data may be for performing EVM detection on a physical link between the first unit and the second unit.

In an example, the resource information of the EVM detection data, namely, the time domain information of the EVM detection data, may include a start frame position of the EVM detection data, a quantity of frames in which the EVM detection data is continuously sent/an end frame position of the EVM detection data, and a subframe position in which the EVM detection data is located.

In an implementation, for a time division duplexing (time division duplexing, TDD) radio frame, the EVM detection data may be inserted into a guard period (guard period, GP) in the TDD radio frame. In this way, impact on a service can be avoided.

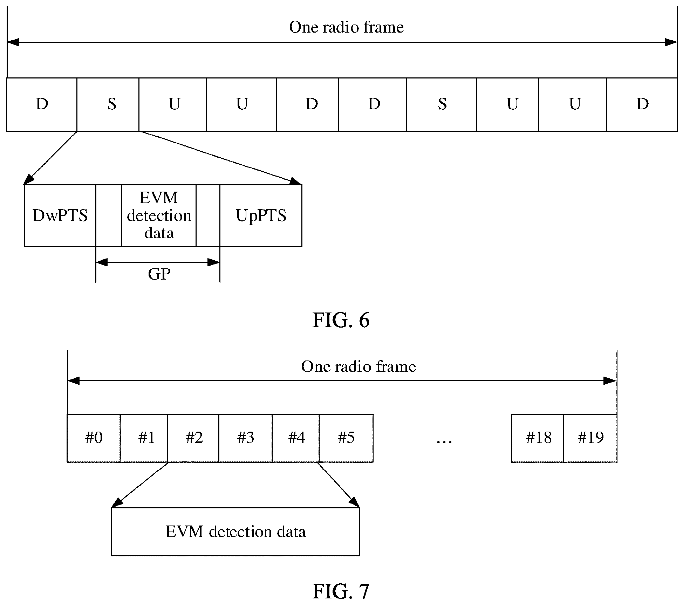

For example, refer to the TDD radio frame shown in FIG. 6. The TDD radio frame includes an uplink (uplink, U) subframe, a downlink (downlink, D) subframe, and a special (special, S) subframe. The special subframe includes a downlink pilot time slot (downlink pilot time slot, DwPTS), a GP, and an uplink pilot time slot (uplink Pilot time slot, UpPTS), and the EVM detection data may be inserted into the GP.

In another implementation, for a frequency division duplex (frequency division duplexing, FDD) radio frame, the EVM detection data may be inserted into a reserved subframe without a service. In this way, impact on the service can be avoided.

For example, refer to the FDD radio frame shown in FIG. 7. In the FDD radio frame, one subframe includes two time slots, and one radio frame includes 20 time slots in total, namely, a time slot #0 to a time slot #19. A time slot # 2 to a time slot # 4 correspond to the reserved subframe without the service, and the EVM detection data may be inserted into the time slot # 2 to the time slot # 4.

In an example, the second information may further include a physical address of the second unit. The physical address may uniquely identify the second unit. For example, the physical address may be a global physical address of the second unit.

For example, if the first unit is the BBU 220 in FIG. 3, and the second unit is the RRU 240 in FIG. 3, the second information may further include a physical address of the RRU 240. For another example, if the first unit is the DU 320 in FIG. 4, and the second unit is the AAU 330 in FIG. 4, the second information may further include a physical address of the AAU 330.

In addition, the second information may alternatively be sent in a broadcast form. The second unit may be any second unit that can receive the second information broadcast by the first unit.

S430: The second unit collects the EVM detection data on at least one node based on the second information.

In an example, the second information may further include indication information of the at least one node in the second unit, and the indication information of the at least one node indicates the at least one node.

For example, if a first node expects a second node to perform the EVM detection on only a part of nodes, the second information may carry indication information of the part of nodes. The second node collects the EVM detection data only on the part of nodes based on the indication information of the part of nodes. In this way, the EVM detection can be implemented on a specified node.

In addition, in a possible implementation, if the second node does not include the indication information of the node, the second unit may perform, by default, the EVM detection on at least one node that affects EVM.

For example, the at least one node includes one or more of the following: an input of the second unit, an input of clipping processing, an output of the clipping processing, an input of digital pre-distortion DPD processing, an output of the digital pre-distortion DPD processing, or an output of an analog link.

An EVM of the second unit is mainly affected by a factor such as I/Q magnitude imbalance, non-linear distortion, or phase distortion. Based on impact of different devices, several key nodes of the second unit are used as data collection nodes, such as the input of the second unit, the input of the clipping processing, the output of the clipping processing, the input of the digital pre-distortion DPD processing, the output of the DPD processing, and the output of the analog link, so that the EVM of the second unit can be accurately evaluated.

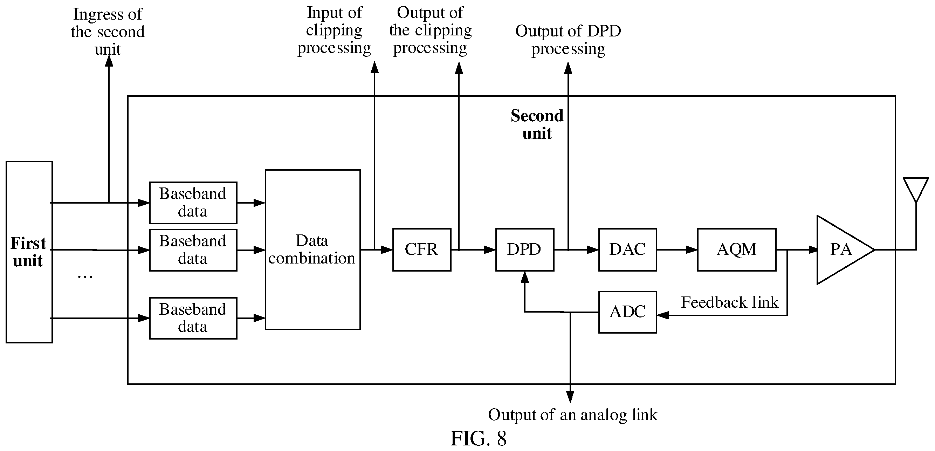

The following describes the several nodes of the second unit with reference to a diagram of a structure of the second unit shown in FIG. 8.

For example, FIG. 8 is the diagram of the structure of the second unit. Refer to FIG. 8. Baseband data (for example, the EVM detection data) output by the first unit reaches an ingress of the second unit through the physical link between the first unit and the second unit. Ingress data of the second unit is unified into one signal through rate conversion and data combination. Then, crest factor reduction (clipping) (crest factor reduction, CFR) processing, digital-to-analog conversion (digital-to-analog conversion, DAC) processing, and analog quadrature modulation (analog quadrature modulation, AQM) processing may be sequentially performed on the signal. A signal obtained through the AQM processing is processed by a power amplifier (power amplifier, PA), and then a processed signal is transmitted. In addition, the signal obtained through the AQM processing is also processed by an analog-to-digital converter (analog-to-digital converter, ADC), and then a processed signal is fed back to DPD.

Node 1: Input of the second unit

The input of the second unit refers to the ingress of the second unit. Assuming that the data output by the first unit is ideal data without deterioration, a loss in this phase mainly comes from the physical link connected between the first unit and the second unit, including physical connection devices such as an optical fiber and an optical module. Functions of this part of devices are to connect the first unit and the second unit, transmit the data, and control the signal.

Node 2: Input of the clipping processing

Before clipping is performed on the ingress data of the second node, this part mainly implements data rate conversion and data combination, and unifies the ingress data into one signal, to facilitate subsequent processing.

Node 3: Output of the clipping processing (that is, the input of the DPD processing)

After a plurality of pieces of data are combined, a peak-to-average ratio of the signal increases. A main purpose of the clipping is to reduce a peak-to-average ratio of peak to average power ratio (peak to average power ratio, PAR) and protect the power amplifier. For example, a part that exceeds a threshold may be extracted, processed, and then clipped. In this way, the original signal is inevitably damaged, and more clipping performed indicates a greater deterioration degree of the EVM.

Node 4: Output of the DPD processing

DPD means pre-distortion processing performed on a baseband digital signal, to cancel distortion caused by the PA working in a non-linear area, reduce working back-off of the PA, and increase transmit power of a product. Non-linear processing is also an important factor in deterioration of the EVM.

Node 5: Output of the analog link (which is also output data of the analog link)

The foregoing phases are mainly a digital domain processing part. A signal transmitted by the second unit is in analog domain. Therefore, the remaining transmit data in analog domain is obtained through a feedback link in the second unit, and a loss in digital-to-analog conversion and a loss on the analog link are included.

By using the foregoing several nodes as the data collection nodes, a node on which the EVM deteriorates can be more accurately observed, so that more effective post-processing can be performed in a next processing phase.

It should be understood that, FIG. 8 shows only important modules of the second unit, and the structure shown in FIG. 8 should not constitute any limitation on this application. For example, in practice, the second unit may further include another module for processing the data. For example, the CFR and the DPD may not be directly connected, and there is another module between the CFR and the DPD to process the data. For example, an input of the ADC in the feedback link is an output of the PA instead of an output of the AQM.

S440: The second unit determines an EVM value of any node in the at least one node based on EVM detection data collected on the node.

Specifically, for any node, the second unit may determine, based on the EVM detection data and the EVM detection data collected on the node, the EVM value of the node.

The following uses a node as an example to describe how to calculate an EVM value of the node.

In an example, the second unit may first determine whether EVM detection data collected on the node is valid data. In this way, collection of invalid data can be avoided. If the EVM detection data collected on the node is valid data, data processing may be performed on the EVM detection data collected on the node, to obtain processed data. For example, some nodes may need different adjustment such as data rate adjustment and direct current removal. Finally, the second unit may determine the EVM value of the node based on processed processing.

In an example, the EVM value of the node may be determined according to the following formula:

$$EVM = \sqrt{\frac{\left|I_{\mathrm{m}}-I_{\mathrm{n}}\right|^2 + \left|Q_{\mathrm{m}}-Q_{\mathrm{n}}\right|^2}{\left|I_{\mathrm{m}}+Q_{\mathrm{m}}\right|^2}}$$

If the EVM detection data is the fixed data agreed on between the first unit and the second unit, $I_{\mathrm{m}}$ indicates a component of the EVM detection data in a direction I, $Q_{\mathrm{m}}$ indicates a component of the EVM detection data in a direction Q, $I_{\mathrm{n}}$ indicates a component, in the direction I, of the EVM detection data collected on the node, and $Q_{\mathrm{n}}$ indicates a component, in the direction Q, of the EVM detection data collected on the node. If the EVM detection data is the random data sent by the first unit, $I_{\mathrm{m}}$ indicates a component, in a direction I, of EVM detection data collected at the input of the second unit, $Q_{\mathrm{m}}$ indicates a component, in a direction Q, of the EVM detection data collected at the input of the second unit, $I_{\mathrm{n}}$ indicates a component, in the direction I, of the EVM detection data collected on the node, and $Q_{\mathrm{n}}$ indicates a component, in the direction Q, of the EVM detection data collected on the node.

It should be understood that, if some processing, such as the rate adjustment and the direct current removal, is performed on data collected on a specific node, in the foregoing formula, data collected on the node is data that is collected on the node and that is obtained through the processing.

S450: The second unit sends an EVM detection result to the first unit. Correspondingly, the first unit receives the EVM detection result from the second unit.

Specifically, when determining an EVM value of the at least one node, the second unit may report the EVM detection result to the first unit, where the EVM detection result may include the EVM value of the at least one node and a quantity of sampling nodes for the EVM detection data. The first unit may determine an EVM value of each node based on the EVM detection result reported by the second unit.

In conclusion, according to the EVM detection method provided in this application, the first unit may periodically send the EVM detection data to the second unit based on an indication of the network management; and the second unit may determine an EVM value of a corresponding node based on EVM detection data collected on the node, and may report a detection result to the first unit. The method does not need participation of an external spectrometer, so that an EVM value of a radio frequency system can be obtained at low costs. In addition, the method is an online detection task that has no impact on a service, and can run for a long time to monitor and ensure an operating status of the second unit.

Optionally, the method may further include the following step.

S460: The first unit determines a faulty node in the at least one node based on the EVM detection result of the second unit and an EVM detection result of another second unit that belongs to a same link as the second unit.

Specifically, the first unit may determine the faulty node in the at least one node by analyzing the EVM value that is of the at least one node and that is reported by the second unit, and analyzing an EVM value reported by the another second unit that belongs to the same link as the second unit. For example, the first unit is the BBU 110 in FIG. 2, and the second unit is the RRU 120 in FIG. 2. The first unit may determine, by analyzing EVM values reported by the RRU 120, the RRU 130, and the RRU 140, nodes that are in at least one node of the RRU 120 and that may be faulty.

In an example, the first unit may first determine a normal EVM value or an abnormal EVM value in the EVM detection result of the second unit and the EVM detection result of the another second unit; and then determine the faulty node in the at least one node based on the normal EVM value or the abnormal EVM value.

Optionally, the method may further include the following step.

S470: The first unit performs troubleshooting on the determined faulty node.

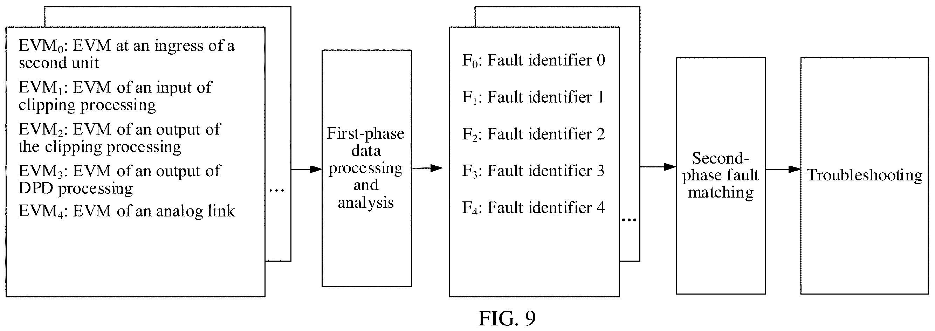

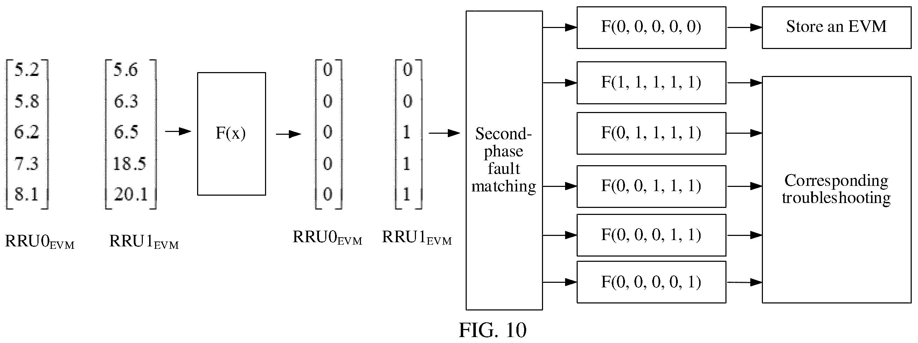

With reference to FIG. 9 and FIG. 10, the following further describes S460 and S470 by using examples.

For example, FIG. 9 is a diagram of a fault analysis model. The first unit may determine the faulty node based on the model shown in FIG. 9. Refer to FIG. 9.

The first unit may summarize and process EVM detection results on a same link First, after obtaining the EVM detection results on the same link, the first unit performs first-phase data processing. In the first-phase data processing, EVM values are classified and an abnormal value and a normal value are selected. For example, a threshold may be defined. A value greater than the threshold is considered as the abnormal EVM value, and a value less than or equal to the threshold is considered as the normal EVM value. For another example, the abnormal value and the normal value may alternatively be selected by using a more accurate adaptive algorithm. For example, in FIG. 9, $F_0$ to $F_4$ sequentially indicate whether $EWM_1$ to $EWM_4$ are abnormal values or normal values, where the normal value may be indicated by 0, and the abnormal value may be indicated by 1. After filtering, matching between EVM values of different second units and different fault models is performed, and the troubleshooting may be performed after the matching is completed.

For example, refer to FIG. 10. There are two second units (namely, an RRU 0 and an RRU 1) on one link, and an EVM calculation result is shown in [ ]. After F(x) (where (x) is a filtering function) filtering is performed, it is considered that a result of the RRU 0 is not abnormal. In this case, the result of the RRU 0 is matched with F[0, 0, 0, 0, 0]. Detected EVM values are stored for training of an adaptive threshold in the first-phase data processing F(x), and the stored EVM values also facilitate visual observation of an indicator change of a radio frequency module. After the filtering is performed on a result of the RRU 1, it is considered that an EVM value obtained through the clipping starts to be abnormal, and the result of the RRU 1 is matched with F[0, 0, 1, 1, 1]. It is considered that the current clipping has great impact on the EVM. Therefore, dynamic adjustment may be performed on a clipping threshold, to optimize a current power gain and ensure signal transmission performance of the module.

In addition, if a specific second unit is matched with F[1, 1, 1, 1, 1], this indicates that an EVM at the ingress of the second unit has deteriorated. In this case, if all second units on the same link are of this result, a physical link between a first-level second unit and the first unit may be checked; or if only one specific second unit has an abnormal result, a physical link between the current-level second unit and an upper-level second unit may be checked. If a specific second unit is matched with F[0, 1, 1, 1, 1], this indicates that an EVM has deteriorated before the clipping is performed. Generally, this is considered as that a device near the data combination is faulty, and further checking is needed. If a specific second unit is matched with F[0, 0, 0, 1, 1], this indicates that the EVM deteriorates after the DPD is performed. Generally, this is because DPD performance becomes poor, and balance of ensuring the output of the power amplifier and signal performance is insufficient. In this case, single-point adjustment needs to be performed on the DPD. If a specific second unit is matched with F[0, 0, 0, 0, 1], this generally indicates that there is a fault on the analog link (also the feedback link in the figure), and hardware performance needs to be checked.

It should be understood that, the foregoing descriptions merely list the troubleshooting performed based on common link devices, and actual troubleshooting solutions may be different. A specific troubleshooting method is not limited in this application.

In the foregoing solution provided in this application, the first unit may determine the faulty node based on the EVM detection result reported by the second unit, to accurately locate a fault position, and improve maintenance and monitoring efficiency. Further, the first unit performs the troubleshooting on the faulty node, so that a network device including the first unit and the second unit can implement functions of monitoring, warning, and self-healing.

The foregoing describes the method embodiments provided in this application, and the following describes the apparatus embodiments provided in this application. It should be understood that, descriptions of the apparatus embodiments correspond to descriptions of the method embodiments. Therefore, for content that is not described in detail, refer to the method embodiments. For brevity, details are not described herein again.

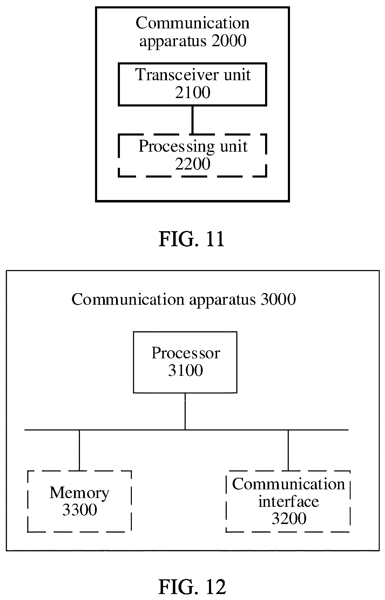

FIG. 11 is a block diagram of a communication apparatus according to an embodiment of this application. As shown in FIG. 11, the communication apparatus 2000 may include a transceiver unit 2100. Optionally, the apparatus may further include a processing unit 2200. The transceiver unit 2100 may implement a corresponding communication function. The communication may be internal communication of the communication apparatus 2000 or may be communication between the communication apparatus 2000 and another apparatus. The processing unit 2200 may implement a corresponding processing function. The transceiver unit 2100 may also be referred to as a communication interface or a transceiver unit. Optionally, the communication apparatus 2000 may further include a storage unit. The storage unit may be configured to store instructions and/or data. The processing unit 2200 may read the instructions and/or the data in the storage unit, to enable the apparatus to implement the foregoing method embodiments.

In a possible design, the communication apparatus 2000 may be the first unit in the foregoing methods, or may be a module or a chip used in the first unit. The communication apparatus 2000 may be configured to perform steps or procedures performed by the first unit in the foregoing methods.

Specifically, the transceiver unit 2100 is configured to: receive first information from a network management, where the first information indicates the communication apparatus to enable an error vector magnitude EVM detection function; the transceiver unit 2100 is further configured to: send second information to a second unit in an EVM detection periodicity based on the first information, where the second information includes EVM detection data and time domain information of the EVM detection data, the time domain information indicates a position of the EVM detection data in a radio frame, and the second unit can implement a radio frequency function; and the transceiver unit 2100 is further configured to: receive an EVM detection result from the second unit, where the EVM detection result includes an EVM value of at least one node in the second unit and a quantity of sampling nodes for the EVM detection data, an EVM value of any node in the at least one node is determined based on EVM detection data collected on the node, and the at least one node includes one or more of the following: an input of the second unit, an input of clipping processing, an output of the clipping processing, an input of digital pre-distortion DPD processing, an output of the DPD processing, or an output of an analog link.

Optionally, the transceiver unit 2100 is further configured to: determine a faulty node in the at least one node based on the EVM detection result of the second unit and an EVM detection result of another second unit that belongs to a same link as the second unit.

Optionally, the processing unit 2200 is configured to: perform troubleshooting on the determined faulty node.

Optionally, the second information further includes a physical address of the second unit and/or indication information of the at least one node.

Optionally, the processing unit 2200 is specifically configured to: determine a normal EVM value or an abnormal EVM value in the EVM detection result of the second unit and the EVM detection result of the another second unit; and determine the faulty node in the at least one node based on the normal EVM value or the abnormal EVM value.

Optionally, the transceiver unit 2100 is further configured to: receive the EVM detection periodicity from the network management.

In a possible design, the communication apparatus 2000 may be the second unit in the foregoing methods, or may be a module or a chip used in the second unit. The communication apparatus 2000 may be configured to perform steps or procedures performed by the second unit in the foregoing methods.

Specifically, the transceiver unit 2100 is configured to: receive second information from a first unit, where the first unit can implement a part or all of baseband functions, the second information includes EVM detection data and time domain information of the EVM detection data, and the time domain information indicates a position of the EVM detection data in a radio frame; the processing unit 2200 is configured to: collect the EVM detection data on at least one node based on the second information, where the at least one node includes one or more of the following: an input of the communication apparatus, an input of clipping processing, an output of the clipping processing, an input of digital pre-distortion DPD processing, an output of the DPD processing, or an output of an analog link; the processing unit 2200 is further configured to: determine an EVM value of any node in the at least one node based on EVM detection data collected on the node; and the transceiver unit 2100 is further configured to: send an EVM detection result to the first unit, where the EVM detection result includes an EVM value of the at least one node and a quantity of sampling nodes for the EVM detection data.

Optionally, the EVM value of any node in the at least one node satisfies the following formula:

$$EVM = \sqrt{\frac{\left|I_m - I_n\right|^2 + \left|Q_m - Q_n\right|^2}{\left|I_m + Q_m\right|^2}}$$

$I_m$ indicates a component of the EVM detection data in a direction I, $Q_m$ indicates a component of the EVM detection data in a direction Q, $I_n$ indicates a component, in the direction I, of EVM detection data collected on the node, and $Q_n$ indicates a component, in the direction Q, of the EVM detection data collected on the node.

In a possible design, the communication apparatus 2000 may be the network management in the foregoing methods, or may be a module or a chip used in the network management. The communication apparatus 2000 may be configured to perform steps or procedures performed by the network management in the foregoing methods.

Specifically, the processing unit 2200 is configured to: generate first information, where the first information indicates a first unit to enable an EVM detection function, and the first unit can implement a part or all of baseband functions; and the transceiver unit 2100 is configured to: send the first information to the first unit.

Optionally, the transceiver unit 2100 is further configured to: send an EVM detection periodicity to the first unit.

It should be understood that, the "unit" in the communication apparatus 2000 may be implemented by hardware, or may be implemented by software, or may be implemented by hardware executing corresponding software. For example, the "unit" may refer to an application-specific integrated circuit (application-specific integrated circuit, ASIC), an electronic circuit, a processor (for example, a shared processor, a dedicated processor, or a group processor) configured to execute one or more software or firmware programs, a memory, a merge logic circuit, and/or another appropriate component that supports the described function. For another example, the transceiver unit 2100 may be replaced with a transceiver machine or a transceiver circuit (for example, may include a receiving circuit and a sending circuit), and the processing unit 2200 may be replaced with a processor or a processing circuit.

FIG. 12 is a block diagram of another communication apparatus 3000 according to an embodiment of this application. The apparatus 3000 may be a first unit, a second unit, or a network management, or may be a chip, a chip system, a processor, or the like that supports the first unit, the second unit, or the network management in implementing the foregoing methods. The apparatus may be configured to implement the methods described in the foregoing method embodiments. For details, refer to descriptions in the foregoing method embodiments.

The apparatus 3000 may include one or more processors 3100. The processor 3100 may also be referred to as a processing unit, and may implement a specific control function. The processor 3100 may be a general-purpose processor, a dedicated processor, or the like. For example, the processor 3100 may be a baseband processor or a central processing unit. The baseband processor may be configured to process a communication protocol and communication data. The central processing unit may be configured to control the communication apparatus (for example, a base station, a baseband chip, a user chip, a DU, or a CU), execute a software program, and process data of the software program.

In an optional design, the processor 3100 may also store instructions and/or data, and the instructions and/or the data may be run by the processor 3100, to enable the apparatus 3000 to perform the methods described in the foregoing method embodiments.

In another optional design, the apparatus 3000 may include a communication interface 3200 configured to implement receiving and sending functions. For example, the communication interface 3200 may be a transceiver circuit, an interface, an interface circuit, or a transceiver. The transceiver circuit, the interface, the interface circuit, or the transceiver configured to implement the receiving and sending functions may be separated, or may be integrated together. The transceiver circuit, the interface, the interface circuit, or the transceiver may be configured to read and write code/data, or the transceiver circuit, the interface, the interface circuit, or the transceiver may be configured to transmit or transfer a signal.

Optionally, the apparatus 3000 may include one or more memories 3300. The memory 3300 may store instructions. The instructions may be run on the processor 3100, to enable the apparatus 3000 to perform the methods described in the foregoing method embodiments. Optionally, the memory 3300 may further store data. Optionally, the processor 3100 may also store instructions and/or data. The processor 3100 and the memory 3300 may be separately arranged, or may be integrated together.

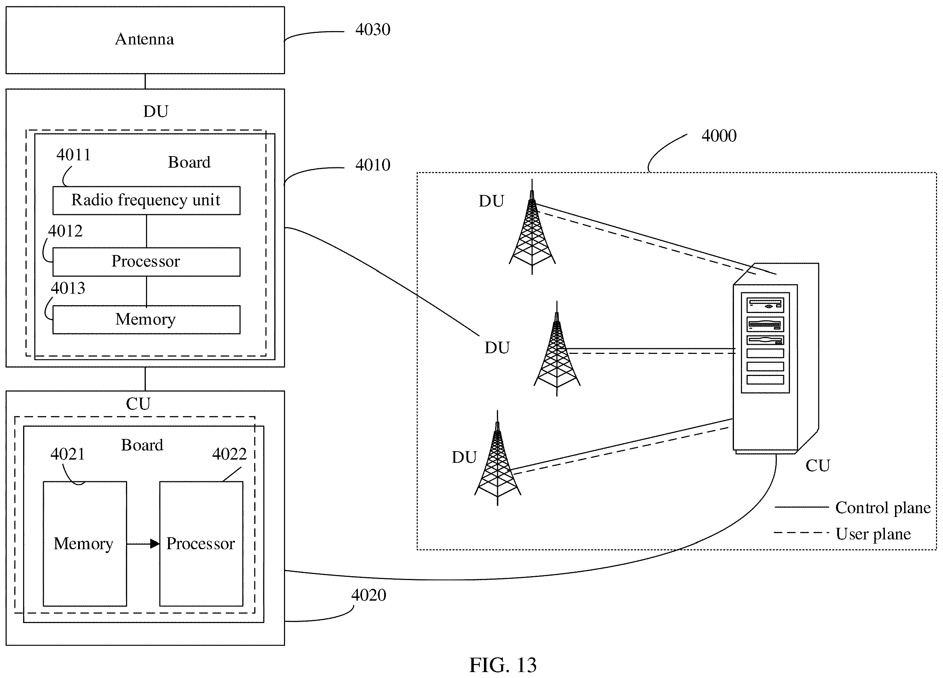

FIG. 13 is a diagram of a structure of a network device 4000 according to an embodiment of this application. The foregoing communication apparatus 2000 and the foregoing communication apparatus 3000 may be configured in the network device 4000. The network device 4000 may perform actions performed by the first unit and the second unit in the foregoing method embodiments.

As shown in FIG. 13, the network device 4000 may include one or more DUs 4010, one or more CUs 4020, and one or more antennas 4030. The CU 4020 may communicate with an NG core network (next generation core network, NC). The DU 4010 may include at least one radio frequency unit 4011, at least one processor 4012, and at least one memory 4013. The DU 4010 part is mainly configured to: receive and send a radio frequency signal, perform conversion between a radio frequency signal and a baseband signal, and perform partial baseband processing. The CU 4020 may include at least one processor 4022 and at least one memory 4021. The CU 4020 and the DU 4010 may communicate with each other through an interface. A control plane (control plane, CP) interface may be Fs-C, for example, F1-C, and a user plane (user plane, UP) interface may be Fs-U, for example, F1-U. The antenna 4030 may be an AAU. However, this is not limited in this application.

The CU 4020 part is mainly configured to: perform baseband processing, control the network device 4000, and the like. The DU 4010 and the CU 4020 may be physically arranged together, or may be physically arranged separately, that is, in a distributed base station. The CU 4020 is a control center of the network device 4000, may also be referred to as a processing unit, and is mainly configured to complete baseband processing functions.

Specifically, baseband processing of the CU and the DU may be divided based on a protocol layer of a wireless network. For example, functions of a PDCP layer and a protocol layer above the PDCP layer are set on the CU, and functions of protocol layers below the PDCP layer, such as an RLC layer and a MAC layer, are set on the DU. For another example, the CU implements functions of an RRC layer and a PDCP layer, and the DU implements functions of an RLC layer, a MAC layer, and a PHY layer.

In addition, optionally, the network device 4000 may include one or more radio units (RU), one or more DUs, and one or more CUs. The DU may include at least one processor 4012 and at least one memory 4013, the RU may include at least one antenna 4030 and at least one radio frequency unit 4011, and the CU may include at least one processor 4022 and at least one memory 4021.

In an example, the CU 4020 may include one or more boards. A plurality of boards may jointly support a radio access network (for example, a 4G network) of a single access standard, or may respectively support radio access networks (for example, an LTE network, a 4G network, or another network) of different access standards. The memory 4021 and the processor 4022 may serve one or more boards. In other words, a memory and a processor may be arranged on each board. Alternatively, a plurality of boards may share a same memory and a same processor. In addition, a necessary circuit may be further arranged on each board. The DU 4010 may include one or more boards. A plurality of boards may jointly support a radio access network (for example, a 4G network) of a single access standard, or may respectively support radio access networks (for example, an LTE network, a 4G network, or another network) of different access standards. The memory 4013 and the processor 4012 may serve one or more boards. In other words, a memory and a processor may be arranged on each board. Alternatively, a plurality of boards may share a same memory and a same processor. In addition, a necessary circuit may be further arranged on each board.

It should be understood that, the network device 4000 shown in FIG. 13 can implement processes of the actions performed by the first unit and the second unit in the foregoing method embodiments. Operations and/or functions of modules in the network device 4000 are respectively for implementing corresponding procedures in the foregoing method embodiments. For details, refer to descriptions in the foregoing method embodiments. To avoid repetition, detailed descriptions are appropriately omitted herein.

It should be understood that, the network device 4000 shown in FIG. 13 is merely a possible architecture of the network device, and should not constitute any limitation on this application. The methods provided in this application are applicable to a network device in another architecture. A specific architecture of the network device is not limited in this application.

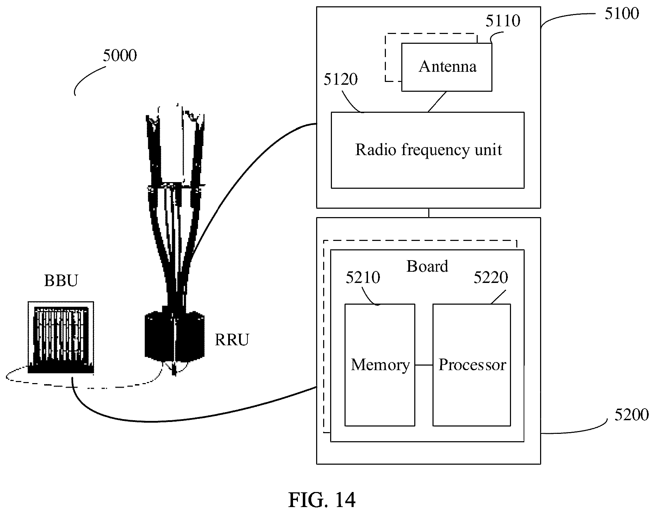

FIG. 14 is a diagram of a structure of a network device 5000 according to an embodiment of this application. The foregoing communication apparatus 2000 and the foregoing communication apparatus 3000 may be configured in the network device 5000. The network device 5000 may perform actions performed by the first unit and the second unit in the foregoing method embodiments.

The network device 5000 may include one or more radio units, such as a remote radio unit (remote radio unit, RRU) 5100 and one or more baseband units (baseband unit, BBU) 5200 (which may also be referred to as digital units (digital unit, DU)). The RRU 5100 may be referred to as a transceiver unit, a communication unit, a transceiver machine, a transceiver circuit, a transceiver, or the like, and may include at least one antenna 5110 and a radio frequency unit 5120. The RRU part 5100 is mainly configured to: receive and send a radio frequency signal, and perform conversion between a radio frequency signal and a baseband signal. The BBU part 5200 is mainly configured to: perform baseband processing, control the network device 5000, and the like. The RRU 5100 and the BBU 5200 may be physically arranged together, or may be physically arranged separately, that is, in a distributed base station.

The BBU 5200 is a control center of the network device 5000, may also be referred to as a processing unit, and is mainly configured to complete baseband processing functions, such as channel encoding, multiplexing, modulation, and spectrum spreading.

In an example, the BBU 5200 may include one or more boards. A plurality of boards may jointly support a radio access network (for example, an LTE system or a 5G system) of a single access standard, or may respectively support radio access networks of different access standards. The BBU 5200 further includes a memory 5210 and a processor 5220. The memory 5210 is configured to store necessary instructions and data. The processor 5220 is configured to control the network device 5000 to perform a necessary action. The memory 5210 and the processor 5220 may serve one or more boards. In other words, a memory and a processor may be arranged on each board. Alternatively, a plurality of boards may share a same memory and a same processor. In addition, a necessary circuit may be further arranged on each board.

In a possible implementation, with development of a system-on-a-chip (system-on-a-chip, SoC) technology, all or a part of functions of the part 5200 and the part 5100 may be implemented by using the SoC technology, for example, implemented by using one base station function chip. The base station function chip integrates devices such as a processor, a memory, and an antenna interface. A program of a base station-related function is stored in the memory, and the processor executes the program, to implement the base station-related function. Optionally, the base station function chip can also read from an external memory of the chip, to implement the base station-related function.

It should be understood that, the structure of the network device 5000 shown in FIG. 14 is merely a possible form, and should not constitute any limitation on embodiments of this application. In this application, a possibility that there may be a base station structure in another form in the future is not excluded.

It should be understood that, in a possible design, steps in the method embodiments provided in this application may be completed by using a hardware integrated logic circuit in a processor or by using instructions in a form of software. Steps of the methods disclosed with reference to embodiments of this application may be directly performed and completed by a hardware processor, or may be performed and completed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory. The processor reads information in the memory, and completes the steps of the foregoing methods in combination with hardware in the processor. To avoid repetition, details are not described herein again.

It should be noted that, the processor in embodiments of this application may be an integrated circuit chip, and has a signal processing capability. In an implementation process, steps in the method embodiments may be completed by using a hardware integrated logic circuit in a processor or by using instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component, and may implement or perform the methods, steps, and logical block diagrams disclosed in embodiments of this application. The general-purpose processor may be a microprocessor, or the processor may be any conventional processor or the like. The steps of the methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory. The processor reads information in the memory, and completes the steps of the foregoing methods in combination with hardware in the processor.

It may be understood that, the memory in embodiments of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. Through example but not limitative descriptions, many forms of RAMs may be used, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that, memories of the systems and methods described in this specification are intended to include but are not limited to these memories and any memory of another appropriate type.

This application further provides a computer program product. The computer program product includes computer program code. When the computer program code is run on a computer, the computer is enabled to perform steps or procedures performed by the first unit, the second unit, or the network management in any one of the foregoing method embodiments.

This application further provides a computer-readable storage medium. The computer-readable storage medium stores program code. When the program code is run on a computer, the computer is enabled to perform steps or procedures performed by the first unit, the second unit, or the network management in any one of the foregoing method embodiments.

This application further provides a network device, including a first unit and a second unit.

This application further provides a communication system, including one or more of the following: a first unit, a second unit, or a network management.

The foregoing apparatus embodiments completely correspond to the method embodiments, and corresponding modules or units perform corresponding steps. For example, a communication unit or a communication interface performs a receiving step or a sending step in the method embodiments, and a processing unit or a processor may perform a step other than the sending step and the receiving step.

In embodiments of this application, terms and English acronyms and abbreviations are all examples provided for ease of description, and should not constitute any limitation on this application. This application does not exclude a possibility of defining another term that can implement same or similar functions in an existing or future protocol.

Terms such as "component", "module", and "system" used in this specification are for indicating computer-related entities, hardware, firmware, a combination of hardware and software, software, or software in execution. For example, a component may be, but is not limited to, a process that runs on a processor, a processor, an object, an executable file, an execution thread, a program, and/or a computer. As shown in the figure, both an application that runs on a computing device and the computing device may be components. One or more components may reside in the process and/or the execution thread, and the component may be located on one computer and/or distributed between two or more computers. In addition, the components may be executed from various computer-readable storage media that store various data structures. For example, the components may communicate, based on, for example, a signal having one or more data packets (for example, data from two components interacting with another component in a local system, a distributed system, and/or across a network such as the internet interacting with other systems via the signal), through a local and/or remote process.

A person of ordinary skill in the art may be aware that, various illustrative logical blocks (illustrative logical blocks) and steps (steps) that are described in embodiments disclosed in this specification can be implemented by electronic hardware or a combination of computer software and electronic hardware. Whether the functions are performed in a hardware or software manner depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a specific working process of the foregoing systems, apparatuses, and units, refer to a corresponding process in the foregoing method embodiments. Details are not described herein again.

In several embodiments provided in this application, it should be understood that the disclosed systems, apparatuses, and methods may be implemented in other manners. For example, the apparatus embodiments described above are merely examples. For example, division of the units is merely logical function division. In an actual implementation, there may be another division manner. For example, a plurality of units or components may be combined or integrated into another system, or some features may be ignored or not performed. In addition, displayed or discussed mutual couplings or direct couplings or communication connections may be implemented through some interfaces. The indirect couplings or communication connections between the apparatuses or units may be implemented in electronic, mechanical, or other forms.

Units described as separate components may or may not be physically separate, and components displayed as units may or may not be physical units, to be specific, may be located at one position, or may be distributed on a plurality of network units. A part or all of units may be selected based on an actual requirement to achieve the objectives of the solutions of embodiments.

In addition, functional units in embodiments of this application may be integrated into one processing unit, or each of the units may exist alone physically, or two or more units may be integrated into one unit.

In the foregoing embodiments, all or a part of functions of the functional units may be implemented by using software, hardware, firmware, or any combination thereof. When software is used for implementing embodiments, all or a part of embodiments may be implemented in a form of a computer program product. The computer program product includes one or more computer instructions (programs). When the computer program instructions (programs) are loaded and executed on a computer, procedures or functions according to embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, a computer, a server, or a data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium that can be accessed by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

When the functions are implemented in a form of a software functional unit and sold or used as an independent product, the functions may be stored in a computer-readable storage medium. Based on such an understanding, the technical solutions of this application essentially, or the part contributing to a conventional technology, or a part of the technical solutions may be embodied in a form of a software product. The computer software product is stored in a storage medium, and includes several instructions for instructing a computer device (which may be a personal computer, a server, a network device, or the like) to perform all or a part of the steps of the methods in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

**Claims**

1. An error vector magnitude EVM detection method, applied to a first unit, wherein the first unit can implement a part or all of baseband functions, and the method comprises:

    receiving first information from a network management, wherein the first information indicates the first unit to enable an EVM detection function;
    sending second information to a second unit in an EVM detection periodicity based on the first information, wherein the second information comprises the EVM detection data and time domain information of the EVM detection data, the time domain information indicates a position of the EVM detection data in a radio frame, and the second unit can implement a radio frequency function; and

receiving an EVM detection result from the second unit, wherein the EVM detection result comprises an EVM value of at least one node in the second unit and a quantity of sampling nodes for the EVM detection data, an EVM value of any node in the at least one node is determined based on EVM detection data collected on the node, and the at least one node comprises one or more of the following: an input of the second unit, an input of clipping processing, an output of the clipping processing, an input of digital pre-distortion DPD processing, an output of the DPD processing, or an output of an analog link.

2. The method according to claim 1, wherein the method further comprises:
determining a faulty node in the at least one node based on the EVM detection result of the second unit and an EVM detection result of another second unit that belongs to a same link as the second unit.

3. The method according to claim 2, wherein the method further comprises:
performing troubleshooting on the determined faulty node.

4. The method according to any one of claims 1 to 3, wherein the second information further comprises a physical address of the second unit and/or indication information of the at least one node.

5. The method according to claim 2, wherein determining the faulty node in the at least one node based on the EVM detection result of the second unit and the EVM detection result of the another second unit that belongs to the same link as the second unit comprises:

determining a normal EVM value or an abnormal EVM value in the EVM detection result of the second unit and the EVM detection result of the another second unit; and
determining the faulty node in the at least one node based on the normal EVM value or the abnormal EVM value.

6. The method according to any one of claims 1 to 5, wherein before sending the second information to the second unit in the EVM detection periodicity based on the first information, the method further comprises:
receiving the EVM detection periodicity from the network management.

7. An error vector magnitude EVM detection method, applied to a second unit, wherein the second unit can implement a radio frequency function, and the method comprises:

receiving second information from a first unit, wherein the first unit can implement a part or all of baseband functions, the second information comprises EVM detection data and time domain information of the EVM detection data, and the time domain information indicates a position of the EVM detection data in a radio frame;
collecting the EVM detection data on at least one node based on the second information, wherein the at least one node comprises one or more of the following: an input of the second unit, an input of clipping processing, an output of the clipping processing, an input of digital pre-distortion DPD processing, an output of the DPD processing, or an output of an analog link;
determining an EVM value of any node in the at least one node based on EVM detection data collected on the node; and
sending an EVM detection result to the first unit, wherein the EVM detection result comprises an EVM value of the at least one node and a quantity of sampling nodes for the EVM detection data.

8. The method according to claim 7, wherein the EVM value of any node in the at least one node satisfies the following formula:

$$EVM = \sqrt{\frac{\left|I_m - I_n\right|^2 + \left|Q_m - Q_n\right|^2}{\left|I_m + Q_m\right|^2}}$$

wherein $I_m$ indicates a component of the EVM detection data in a direction I, $Q_m$ indicates a component of the EVM detection data in a direction Q, $I_n$ indicates a component, in the direction I, of the EVM detection data collected on the node, and $Q_n$ indicates a component, in the direction Q, of the EVM detection data collected on the node.

9. An error vector magnitude EVM detection method, applied to a network management, wherein the method comprises:

generating first information, wherein the first information indicates a first unit to enable an EVM detection function, and the first unit can implement a part or all of baseband functions; and
sending the first information to the first unit.

**10.** The method according to claim 9, wherein the method further comprises:
sending an EVM detection periodicity to the first unit.

**11.** A communication apparatus, comprising:

a transceiver unit, configured to: receive first information from a network management, wherein the first information indicates the communication apparatus to enable an error vector magnitude EVM detection function;
the transceiver unit is further configured to: send second information to a second unit in an EVM detection periodicity based on the first information, wherein the second information comprises the EVM detection data and time domain information of the EVM detection data, the time domain information indicates a position of the EVM detection data in a radio frame, and the second unit can implement a radio frequency function; and
the transceiver unit is further configured to: receive an EVM detection result from the second unit, wherein the EVM detection result comprises an EVM value of at least one node in the second unit and a quantity of sampling nodes for the EVM detection data, an EVM value of any node in the at least one node is determined based on EVM detection data collected on the node, and the at least one node comprises one or more of the following: an input of the second unit, an input of clipping processing, an output of the clipping processing, an input of digital pre-distortion DPD processing, an output of the DPD processing, or an output of an analog link.

**12.** The communication apparatus according to claim 11, wherein the communication apparatus further comprises:
a processing unit, configured to: determine a faulty node in the at least one node based on the EVM detection result of the second unit and an EVM detection result of another second unit that belongs to a same link as the second unit.

**13.** The communication apparatus according to claim 12, wherein the processing unit is further configured to:
perform troubleshooting on the determined faulty node.

**14.** The communication apparatus according to any one of claims 11 to 13, wherein the second information further comprises a physical address of the second unit and/or indication information of the at least one node.

**15.** The communication apparatus according to claim 12, wherein the processing unit is specifically configured to:

determine a normal EVM value or an abnormal EVM value in the EVM detection result of the second unit and the EVM detection result of the another second unit; and
determine the faulty node in the at least one node based on the normal EVM value or the abnormal EVM value.

**16.** The communication apparatus according to any one of claims 11 to 15, wherein the transceiver unit is further configured to:
receive the EVM detection periodicity from the network management.

**17.** A communication apparatus, comprising:

a transceiver unit, configured to: receive second information from a first unit, wherein the first unit can implement a part or all of baseband functions, the second information comprises EVM detection data and time domain information of the EVM detection data, and the time domain information indicates a position of the EVM detection data in a radio frame; and
a processing unit, configured to: collect the EVM detection data on at least one node based on the second information, wherein the at least one node comprises one or more of the following: an input of the communication apparatus, an input of clipping processing, an output of the clipping processing, an input of digital pre-distortion DPD processing, an output of the DPD processing, or an output of an analog link;
the processing unit is further configured to: determine an EVM value of any node in the at least one node based on EVM detection data collected on the node; and
the transceiver unit is further configured to: send an EVM detection result to the first unit, wherein the EVM detection result comprises an EVM value of the at least one node and a quantity of sampling nodes for the EVM detection data.

**18.** The communication apparatus according to claim 17, wherein the EVM value of any node in the at least one node satisfies the following formula:

$$EVM = \sqrt{\frac{\left|I_m - I_n\right|^2 + \left|Q_m - Q_n\right|^2}{\left|I_m + Q_m\right|^2}}$$

wherein $I_m$ indicates a component of the EVM detection data in a direction I, $Q_m$ indicates a component of the EVM detection data in a direction Q, $I_n$ indicates a component, in the direction I, of the EVM detection data collected on the node, and $Q_n$ indicates a component, in the direction Q, of the EVM detection data collected on the node.

19. A communication apparatus, comprising:

   a processing unit, configured to: generate first information, wherein the first information indicates a first unit to enable an EVM detection function, and the first unit can implement a part or all of baseband functions; and
   a transceiver unit, configured to: send the first information to the first unit.

20. The communication apparatus according to claim 19, wherein
   the transceiver unit is further configured to: send an EVM detection periodicity to the first unit.

21. A network device, comprising the communication apparatus according to any one of claims 11 to 16, and the communication apparatus according to claim 17 or 18.

22. A communication apparatus, comprising a processor, wherein the processor is coupled to a memory, and the memory is configured to store a program or instructions; and when the program or the instructions are executed by the processor, the apparatus is enabled to perform the method according to any one of claims 1 to 6, according to claim 7 or 8, or according to claim 9 or 10.

23. A network device, comprising a processor, wherein the processor is coupled to a memory, and the memory is configured to store a program or instructions; and when the program or the instructions are executed by the processor, the network device is enabled to perform the method according to any one of claims 1 to 6 and the method according to claim 7 or 8.

24. A computer-readable storage medium, wherein the computer-readable storage medium stores a computer program or instructions; and when the computer program or the instructions are executed, the computer is enabled to perform the method according to any one of claims 1 to 6, according to claim 7 or 8, or according to claim 9 or 10.

25. A computer program product, comprising computer program instructions, wherein the computer program instructions enable the computer to perform the method according to any one of claims 1 to 6, according to claim 7 or 8, or according to claim 9 or 10.

26. A chip, comprising a processor configured to invoke a computer program from a memory and run the computer program, to enable a communication apparatus on which the chip is installed to perform the method according to any one of claims 1 to 6, according to claim 7 or 8, or according to claim 9 or 10.

FIG. 1

FIG. 2

FIG. 3

FIG. 4

400

| Network management | First unit | Second unit |

S410: First information

S420: Second information
(EVM detection data)

S430: Collect the EVM detection data on at least one node based on the second information

S440: Determine an EVM value of any node in the at least one node based on EVM detection data collected on the node

S450: EVM detection result

S460: Determine a faulty node in the at least one node based on the EVM detection result of the second unit and an EVM detection result of another second unit that belongs to a same link as the second unit

S470: Perform troubleshooting on the determined faulty node

FIG. 5

One radio frame

| D | S | U | U | D | D | S | U | U | D |

| DwPTS | | EVM detection data | | UpPTS |

GP

FIG. 6

One radio frame

| #0 | #1 | #2 | #3 | #4 | #5 | ... | #18 | #19 |

EVM detection data

FIG. 7

EP 4 622 203 A1

FIG. 8

Troubleshooting

Second-phase fault matching

$F_0$: Fault identifier 0

$F_1$: Fault identifier 1

$F_2$: Fault identifier 2

$F_3$: Fault identifier 3

$F_4$: Fault identifier 4

First-phase data processing and analysis

$EVM_0$: EVM at an ingress of a second unit

$EVM_1$: EVM of an input of clipping processing

$EVM_2$: EVM of an output of the clipping processing

$EVM_3$: EVM of an output of DPD processing

$EVM_4$: EVM of an analog link

FIG. 9

$$RRU0_{EVM} = \begin{bmatrix} 5.2 \\ 5.8 \\ 6.2 \\ 7.3 \\ 8.1 \end{bmatrix} \quad RRU1_{EVM} = \begin{bmatrix} 5.6 \\ 6.3 \\ 6.5 \\ 18.5 \\ 20.1 \end{bmatrix} \rightarrow \boxed{F(x)} \rightarrow RRU0_{EVM} = \begin{bmatrix} 0 \\ 0 \\ 0 \\ 0 \\ 0 \end{bmatrix} \quad RRU1_{EVM} = \begin{bmatrix} 0 \\ 0 \\ 1 \\ 1 \\ 1 \end{bmatrix}$$

Second-phase fault matching

F(0, 0, 0, 0, 0) → Store an EVM

F(1, 1, 1, 1, 1)

F(0, 1, 1, 1, 1)

F(0, 0, 1, 1, 1) → Corresponding troubleshooting

F(0, 0, 0, 1, 1)

F(0, 0, 0, 0, 1)

FIG. 10

FIG. 11

FIG. 12

FIG. 13

FIG. 14

## INTERNATIONAL SEARCH REPORT

| International application No. |
|---|
| **PCT/CN2022/144196** |

### A. CLASSIFICATION OF SUBJECT MATTER

H04L27/00(2006.01)i

According to International Patent Classification (IPC) or to both national classification and IPC

### B. FIELDS SEARCHED

Minimum documentation searched (classification system followed by classification symbols)

IPC: H04L

Documentation searched other than minimum documentation to the extent that such documents are included in the fields searched

Electronic data base consulted during the international search (name of data base and, where practicable, search terms used)

CNABS; CNTXT; VEN; USTXT; WOTXT; EPTXT; CNKI: 误差向量幅度, 检测, 测量, 监测, 启动, 开启, 触发, 指示, 周期, 射频拉远单元, 基带单元, 分布单元, 有源天线单元, EVM, detect, measure, monitor, start, trigger, initiate, period, BBU, RRU, DU, AAU

### C. DOCUMENTS CONSIDERED TO BE RELEVANT

| Category* | Citation of document, with indication, where appropriate, of the relevant passages | Relevant to claim No. |
|---|---|---|
| X | CN 106332157 A (ZTE CORP.) 11 January 2017 (2017-01-11)<br>description, paragraphs [0029]-[0077] | 9, 10, 19-26 |
| A | CN 102118760 A (ZTE CORP.) 06 July 2011 (2011-07-06)<br>entire document | 1-26 |
| A | CN 110226275 A (BOMBARDIER RECREATIONAL PRODUCTS INC.) 10 September 2019 (2019-09-10)<br>entire document | 1-26 |
| A | CN 113708852 A (HUAWEI TECHNOLOGIES CO., LTD.) 26 November 2021 (2021-11-26)<br>entire document | 1-26 |
| A | WO 2022083856 A1 (NOKIA TECHNOLOGIES OY) 28 April 2022 (2022-04-28)<br>entire document | 1-26 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **04 September 2023** | **21 September 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2022/144196**

| Patent document cited in search report | | | Publication date (day/month/year) | Patent family member(s) | | | Publication date (day/month/year) |
|---|---|---|---|---|---|---|---|
| CN | 106332157 | A | 11 January 2017 | WO | 2017004920 | A1 | 12 January 2017 |
| CN | 102118760 | A | 06 July 2011 | WO | 2011079558 | A1 | 07 July 2011 |
| CN | 110226275 | A | 10 September 2019 | EP | 3549230 | A1 | 09 October 2019 |
| | | | | EP | 3549230 | A4 | 29 April 2020 |
| | | | | EP | 3549230 | B1 | 06 October 2021 |
| | | | | WO | 2018100531 | A1 | 07 June 2018 |
| | | | | US | 2021242709 | A1 | 05 August 2021 |
| | | | | US | 11721972 | B2 | 08 August 2023 |
| | | | | ES | 2902748 | T3 | 29 March 2022 |
| | | | | US | 2019319472 | A1 | 17 October 2019 |
| | | | | US | 10992164 | B2 | 27 April 2021 |
| | | | | EP | 3943335 | A1 | 26 January 2022 |
| CN | 113708852 | A | 26 November 2021 | | None | | |
| WO | 2022083856 | A1 | 28 April 2022 | WO | 2022083856 | A9 | 02 June 2022 |

Form PCT/ISA/210 (patent family annex) (July 2022)